# EUROPÄISCHE PATENTSCHRIFT

(11) **EP 2 729 297 B1**
(45) Veröffentlichungstag und Bekanntmachung des Hinweises auf die Patenterteilung: **09.12.2015**
(21) Anmeldenummer: 12731449.0
(22) Anmeldetag: 03.07.2012
(51) Int. Cl.: B29C 73/12, B29C 70/54, B29C 73/24, B29C 73/10

(54) **SYSTEM ZUR HERSTELLUNG UND REPARATUR VON KUNSTSTOFF-COMPOSITE-BAUTEILEN**
SYSTEM FOR PRODUCING AND REPAIRING PLASTIC COMPOSITE COMPONENTS
SYSTÈME DE FABRICATION ET DE RÉPARATION D'ÉLÉMENTS COMPOSITES EN PLASTIQUE

(30) Priorität: 07.07.2011 CH 11422011
(43) Veröffentlichungstag der Anmeldung: 14.05.2014
(73) Patentinhaber: Zowalla, Jörg-Ulrich, 5614 Sarmenstorf (CH)
(72) Erfinder: Zowalla, Jörg-Ulrich, 5614 Sarmenstorf (CH)
(74) Vertreter: Schneider Feldmann AG Patent- und Markenanwälte
(86) Internationale Anmeldenummer: PCT/EP2012/062872
(87) Internationale Veröffentlichungsnummer: WO 2013/004679

(56) Entgegenhaltungen:
- CH-A1- 701 994
- GB-A- 2 051 655
- US-A1- 2003 188 821

## Beschreibung

### Technisches Gebiet

Die vorliegende Erfindung beschreibt ein System zur Herstellung und Reparatur von Kunststoff-Composite-Bauteilen mit Laminatstruktur, umfassend einen Fasergewebezuschnitt, mit einer definierten Gewebeorientierung, welcher in einer Verarbeitungshülle gelagert ist.

### Stand der Technik

Bei der Herstellung von Laminatstrukturen aus Fasergewebezuschnitten, insbesondere aus glasfaserverstärkten Kunststoffen (GFK) oder kohlenstofffaserverstärkten Kunststoffen (CFK) gibt es wenige geeignete Hilfsmittel. Die Fasergewebezuschnitte werden meist verbreitet heute in sogenannten wet-layup Anwendungen oder beim Handlaminieren einzeln zugeschnitten und mittels geeigneten Klebern zueinander gezielt orientiert sukzessive mehrlagig verklebt. Das Fasergewebe ist als Meterware erhältlich und muss durch den Benutzer zugeschnitten werden. Dabei erfolgt der Zuschnitt und der Imprägnierungsvorgang üblicherweise per Hand, sodass der Benutzer mit trockenem und imprägniertem feuchten Fasergewebezuschnitt in Kontakt kommt. Der imprägnierte Fasergewebezuschnitt wird nach der Benetzung mit Kleber auf eine Oberfläche eines Geleges oder einer Laminatstruktur oder auf eine zu reparierende Oberfläche möglichst glatt aufliegend geklebt und dort relativ zur darunter liegenden Laminatlage ausgerichtet.

Als Ausrichtungsorientierung dient in der Regel die Webrichtung des Fasergewebezuschnittes, wobei diese relativ zur jeweils darunter liegenden Laminatschicht verdreht angeordnet und fixiert wird. Bei bekanntem Vorgehen berührt der Nutzer den Fasergewebezuschnitt im trockenen Zustand beim Zuschnitt und nach dem Zuschnitt des Fasergewebezuschnittes beim Imprägnierungsschritt. Schon beim Zuschnitt kann es vorkommen, dass der Fasergewebezuschnitt verdreckt oder verknickt wird oder das das Gewebe ungewollt ausfranst.

Vor allem ist aber die bisher notwendige Berührung im imprägnierten Zustand störend, da der Benutzer seiner Finger verklebt. Als einfache Abhilfe sind Gummihandschuhe einsetzbar, welche den direkten Kontakt mit dem Kleber oder Harz verhindern. Es ist trotzdem schwierig für den Benutzer die einzelnen Fasergewebezuschnitte im imprägnierten Zustand gezielt übereinander zu legen. Da die Webrichtung im imprägnierten Zustand nicht immer sicher erkennbar ist, kann auch nicht gewährleistet werden, dass die Ausrichtung korrekt durchgeführt wird. Eine mehrmalige Korrektur der Ausrichtung ist die Folge, wobei der Benutzer immer beachten muss, dass die imprägnierten Fasergewebezuschnitte keine Falten bilden und glatt aufliegen.

In der US2006191624 wird ein Verfahren beschrieben, mittels welchem ein Fasergewebezuschnitt in einer vorbehandelten Schadstelle in einer Laminatstruktur platziert und dort festgeklebt wird, ebenfalls in einem wet-layup Verfahren. Ausserdem kann das vorgestellte Verfahren auch genutzt werden, um Laminatstrukturen aus einer Mehrzahl von übereinanderliegenden Fasergewebezuschnitten herzustellen. Nach dem Zuschnitt des Fasergewebezuschnittes auf die gewünschte Grösse und Form wird der Fasergewebezuschnitt mit einem Harz oder anderen geeigneten Klebstoff imprägniert. Dies geschieht in einer Verarbeitungshülle. Um eine Winkelausrichtung des Fasergewebezuschnittes relativ zur Ausrichtung der äusseren Laminatstruktur reproduzierbar zu erreichen, wird eine Orientierungsmarkierung auf der Verarbeitungshülle angebracht, mit welcher die Orientierung des Fasergewebezuschnittes relativ zum Untergrund abgeglichen wird. Nach der Imprägnierung kann der Fasergewebezuschnitt auf die äussere Schicht der Laminatstruktur gelegt, ausgerichtet und letztlich stoffschlüssig fixiert werden.

Die US2006191624 offenbart den Zuschnitt des Fasergewebezuschnittes ausserhalb der Verarbeitungshülle, wobei nicht explizit beschrieben wird, ob dies mit der Hand oder mittels Vorrichtung geschieht. Kleine Servicebetriebe und Privatpersonen werden nicht auf eine geeignete Vorrichtung zurückgreifen können. Das Fasergewebe muss bei der Behandlung zwangsläufig mit der Hand berührt werden. Diese Berührung vor der Imprägnierung und der Einfügung des Fasergewebes in die Verarbeitungshülle ist nachteilig. Es kann Schmutz, beispielsweise in Form von Fett auf das Fasergewebe gelangen oder das Fasergewebe kann umgeschlagen oder sogar verknickt werden, wodurch nicht mehr gewährleistet werden kann, dass saubere und glatte ebene Fasergewebezuschnitte die zu reparierende Oberfläche aufgebracht werden können, bzw. eine geeignete ebene äussere Oberfläche einer Laminatstruktur gebildet werden kann.

Schon seit langem sind sogenannte PrePreg, in einer Verarbeitungshülle industriell imprägniert gelagerte Compositegewebe oder Fasergewebezuschnitte als Halbzeuge zur Herstellung oder Reparatur von Gelegen oder Laminatstrukturen bekannt. Diese PrePreg Fasergewebezuschnitte innerhalb der Verarbeitungshülle zeichnen sich dadurch aus, dass der Nutzer auf Fasergewebezuschnitte einer bestimmten Gewebequalität mit einer bestimmten Kunstharzmatrix imprägniert zugreifen kann, ohne die Fasergewebezuschnitte mit den Fingern im trockenen unimprägnierten Zustand berühren zu müssen und diese selbst zu imprägnieren.

Nachteilig ist hier die vorgegebene Haltbarkeit der vorimprägnierten Fasergewebezuschnitte, welche aufgrund der Imprägnierung besteht. Der Kleber verliert spätestens nach zwei Jahren bei ständig tiefgekühlter Lagerung seine Klebkraft, sodass nicht mehr gewährleistet ist, dass sich die einzelnen Lagen ausreichend fest verbinden lassen. Die ständige Kühlung der PrePreg Fasergewebezuschnitte ist ein logistisches und nicht zu letzt ökologisches Problem.

Die CH 701 994 A offenbart ein System gemäss dem Oberbegriff des Anspruchs 1.

Bei der Verwendung wird die Verarbeitungshülle der PrePreg Fasergewebezuschnitte auf die gewünschte Form zugeschnitten, eine erste Folie abgezogen und der Fasergewebezuschnitt auf der gewünschten Oberfläche platziert. Da üblicherweise keine Hinweise auf die Orientierung der Fasergewebezuschnitte innerhalb der Verarbeitungshülle bestehen, muss der Benutzer selbst für Orientierungshilfen sorgen. Wenn der Fasergewebezuschnitt wie gewünscht platziert ist, kann die zweite Folie der Verarbeitungshülle entfernt werden. Der Benutzer muss eine Vielzahl von PrePreg Fasergewebezuschnitten in geeigneten Zuschnittgrössen und Gewebequalitäten tiefgekühlt auf Lager haben, damit gewünschte Auflegeverfahren durchgeführt werden können. Die Lagerhaltung der zu kühlenden PrePreg Fasergewebezuschnitte ist vor allem für Privatanwender nicht möglich. Auch die Übertragung der gewünschten Zuschnittkontur auf den Fasergewebezuschnitt ist bei der Benutzung von PrePregs in der Regel nur mit Schablonen möglich, je nach Wahl der Durchsichtigkeit der Verarbeitungshülle bzw. des Fasergewebes.

### Darstellung der Erfindung

Die vorliegende Erfindung hat sich zur Aufgabe gestellt ein System zu schaffen, welches Fasergewebezuschnitte zur einfachen möglichst kontaktlosen Verwendung bei kostengünstigen trockenen Lagerung bereitstellt, wobei auf einen Zuschnitt des Fasergewebes durch den Benutzer im trockenen Zustand des Fasergewebes verzichtet wird.

Das System bildet ein trockenes und beliebig lang haltbares Halbzeug zur einfachen Herstellung von Gelegen oder Laminatstrukturen bzw. zur vereinfachten reproduzierbaren Reparatur von Gelegen oder Laminatstrukturen.

Mit dem System ist eine einfache Reparatur von Schadstellen in Kunststoff-Composite-Bauteilen mit Laminatstruktur möglich, wobei die Fasergewebezuschnitte wenn überhaupt nur in sehr geringem Masse vom Benutzer direkt berührt werden müssen.

Die vorliegende Erfindung hat sich weiter die Aufgabe gestellt einen Teil der Verpackung des Systems zur Verarbeitung zu nutzen.

### Kurze Beschreibung der Zeichnungen

Der Erfindungsgegenstand wird nachstehend im Zusammenhang mit den anliegenden Zeichnungen beschrieben.
- Figur 1: zeigt ein System in einer Aufsicht, wie es kommerziell erhältlich ist, während
- Figur 2: das System in einem Vertikalschnitt entlang der Linie A-A aus Figur 1 zeigt.
- Figur 3: zeigt eine Aufsicht eines Systems mit teilweise geöffneter Verarbeitungshülle mit teilweise herausgeschwenkter Sicherheitshülle.
- Figur 4: zeigt eine Aufsicht auf eine Verarbeitungshülle mit manuell angezeichneter Zuschnittkontur.
- Figur 5: zeigt eine Aufsicht auf eine Verarbeitungshülle mit eingefügtem Fasergewebezuschnitt, während
- Figur 6: eine perspektivische Ansicht der Verarbeitungshülle gemäss Figur 5 im teilweise aufgeklappten Zustand zeigt.
- Figur 7: zeigt eine Aufsicht auf ein System mit einem vorkonfektionierten Fasergewebezuschnitt mit einer ersten Orientierung, während
- Figur 8: eine Aufsicht auf ein System mit einem vorkonfektionierten Fasergewebezuschnitt mit einer zweiten Orientierung zeigt.
- Figuren 9a und 9b: zeigen jeweils Aufsichten auf Systeme mit vorkonfektionierten Fasergewebezuschnitten in unterschiedlichen Orientierungen bei jeweils aufgedruckter Zuschnittkontur zur Verwendung als Halbzeug.
- Figur 10: zeigt Aufsichten auf Sicherheitshüllen mit Fasergewebezuschnitten gleicher Grösse, welche jeweils unterschiedliche Faserorientierungen aufweisen.
- Figur 11: zeigt Aufsichten auf sukzessiv in einer Schadstelle zu verarbeitende Fasergewebezuschnitte aufsteigender Grösse mit jeweils unterschiedlichen Faserorientierungen in Sicherheitshüllen, welche nach Grössenabstufung und Faserorientierung zu einem Satz kombiniert werden können.

### Beschreibung

Das hier vorgestellte System 0 zur Herstellung und Reparatur von Kunststoff-Composite-Bauteilen mit Laminatstruktur, umfasst einen vorkonfektionierten Fasergewebezuschnitt 3, welcher in einer Sicherheitshülle 2 eingeschlossen ist, wobei die Sicherheitshülle 2 wiederum vollständig von einer Verarbeitungshülle 1 umschlossen ist. Der Fasergewebezuschnitt 3 kann als Fertigmass- oder Übermasszuschnitt vorliegen.

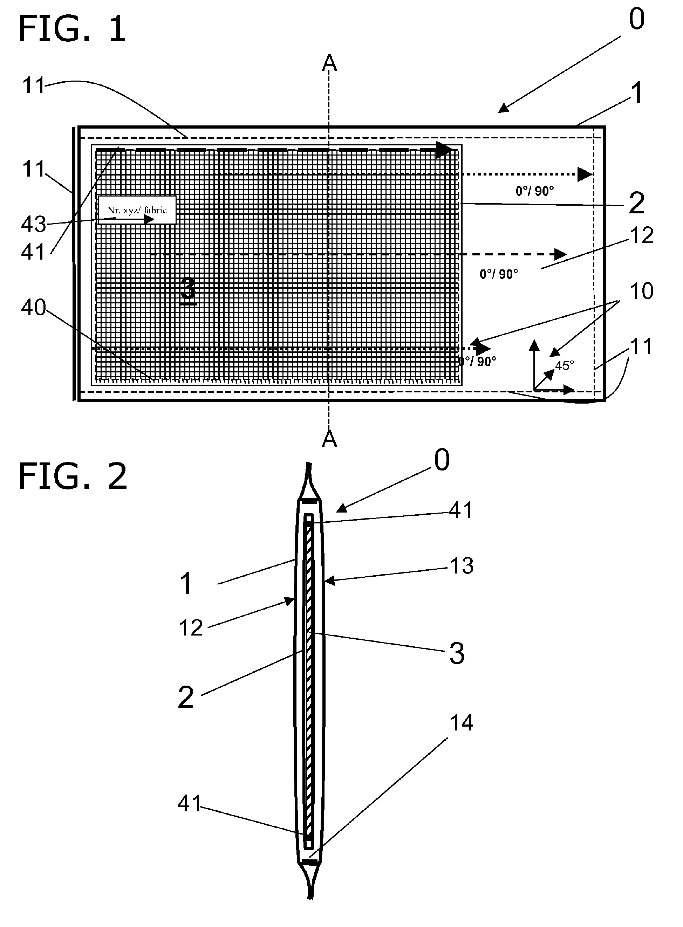

Wie in Figur 1 erkennbar ist die Verarbeitungshülle 1 aus einer transparenten oder transluzenten Kunststofffolie hergestellt, wobei eine erste Folie 12 mit einer zweiten Folie 13 an den Rändern vollständig umlaufend durch Nähte 11 oder Falze 11 verbunden ist, wodurch ein abgeschlossener Innenraum 14 der Verarbeitungshülle 1 gebildet wird. Die Transluzenz oder Transparenz der Verarbeitungshülle 1 ist für den späteren Gebrauch notwendig. Neben den Falzen 11 kann mindestens eine Schweissnaht 11 oder eine Klebenaht 11 vorgesehen sein. Der Innenraum der Verarbeitungshülle 1 ist flüssigkeitsdicht ausgeführt.

Im Innenraum 14 befindet sich die luftdicht und gegen Umwelteinflüsse abgeschlossene Sicherheitshülle 2. Auch die Sicherheitshülle 2 kann aus transparenter oder transluzenter Kunststofffolie hergestellt sein. In der Sicherheitshülle 2 ist der Fasergewebezuschnitt 3 drehgesichert gelagert. Der Fasergewebezuschnitt 3 liegt eng in der Sicherheitshülle 2 an den Folienlagen an.

Die Verarbeitungshülle 1 sowie die Sicherheitshülle 2 können beispielsweise aus Polyethyl hoher oder niedriger Dichte, aus Polypropylen, aus Polyvinylchlorid, Polystyrol, aus Polyester, oder aus Polycarbonat hergestellt sein. Die erste Folie 12 und die zweite Folie 13 der Verarbeitungshülle 1 und die Folienlagen der Sicherheitshülle 2 sollten eine Mindestdicke von einigen Mikrometern aufweisen, damit eine notwendige Reissfestigkeit erreichbar ist. Üblicherweise liegen Standardfoliendicken im Bereich unter 0,1 mm, es können aber auch deutlich dickere Kunststofflagen bis zu einigen Millimetern Dicke verwendet werden.

Das System 0 wird als "bag in bag"-System 0 vertrieben, wobei der gewünschte vorkonfektionierte trockene Fasergewebezuschnitt 3 in entsprechend gewünschter Materialwahl, Qualität, Gewebeart, Vermassung und Kontur vom Hersteller industriell unter reproduzierbaren und reinen Bedingungen vorkonfektioniert in die Sicherheitshülle 2 eingebracht vorliegt. Es gibt bekannte StandardGewebe mit bekannter Materialart und Webart der Faserfäden, welche industriell hergestellt werden. Der Fasergewebezuschnitt 3 wird im trockenen unimprägnierten Zustand nach einem Grobzuschnitt in die Sicherheitshülle 2 eingebracht und die Sicherheitshülle luftdicht verschlossen. Damit ist gesichert, dass der Fasergewebezuschnitt 3 mit keinen Verunreinigungen während des Zuschnittes, des Einführens, sowie während der Lagerung in Kontakt gekommen ist oder in Kontakt kommt.

Die mit dem Fasergewebezuschnitt 3 bestückte Sicherheitshülle 2 ist in eine, von den Abmessungen grösser gewählte Verarbeitungshülle 1 eingebracht. Der vorkonfektionierte und doppelt geschützt gelagerte Fasergewebezuschnitt 3 kann so von einem Endnutzer in unterschiedlichen Ausführungsformen bezogen werden. Dem Endnutzer wird damit die Konfektionierung des Fasergewebes vor der Imprägnierung abgenommen, wodurch eine Fehlerquelle beseitigt wird. Der Fasergewebezuschnitt 3 liegt garantiert immer in sauberen und glatten Portionen vor.

Verwendbare Fasergewebezuschnitte 3 können allgemein als Gewebe in Form von Multiaxialgelegen, als kettverstärktes unidirektionales Halbzeug aus Composite-typischen Materialien wie Glas-, Kohle-, Bor-, Aramid, sowie Polyacrylnitril, Polyester oder Hybridwerkstoffen vorliegen. Meist werden Fasergewebezuschnitte 3 aus glasfaserverstärkten Kunststoffen (GFK) oder kohlenstofffaserverstärkten Kunststoffen (CFK) eingesetzt.

Die Fasergewebezuschnitte 3 werden unter atmosphärischem Druck oder unter einem Druck der geringer als der atmosphärische Druck ist in die Sicherheitshülle 2 nach dem Zuschnitt eingebracht und die Sicherheitshülle 2 anschliessend luftdicht verschlossen. Die Zuschnittskontur 30 des Fasergewebezuschnittes 3 kann unterschiedliche Formen annehmen. Die Gewebeorientierung 31 des Fasergewebezuschnittes 3 ist aber in der Sicherheitshülle 2 in einer gegebenen und drehgesicherten Ausrichtung angeordnet. Damit ist die Gewebeorientierung 31 relativ zur Sicherheitshülle 2 fest definiert. Diese Gewebeorientierung 31 kann an Saumfransen 40 abgelesen werden, welche bei der Vorkonfektionierung des Fasergewebezuschnittes 3 auftreten. Da Saumfransen 40 je nach späterer Verwendung nachteilig sein können, können diese mittels Kettelung oder Klebung aber auch beseitigt werden, wobei wiederum die Kettelung oder Klebung Rückschlüsse über die Gewebeorientierung 31 zulässt. Um die Gewebeorientierung 31 optisch einfach besser kenntlich zu machen, kann ein Aufdruck in Form eines Liniendruckes 41 auf dem Fasergewebezuschnitt 3, bevorzugt im Bereich des äusseren Randes des Fasergewebezuschnittes 3 angeordnet sein. Der Liniendruck kann mit einem gefärbten peeling Lack durchgeführt sein. Eine extra maschinell angeordnete Gewebeorientierung in Form einer Kettelung, Klebung oder durch Aufbringen mindestens eines Liniendruckes 41 kann ein fehlerhaft orientiertes Einbringen des Fasergewebezuschnittes 3 verhindern.

Zur Kennzeichnung des in der Sicherheitshülle 2 befindlichen Fasergewebezuschnittes 3 kann ein Etikett 43 auf der Sicherheitshülle 2 vorgesehen sein, welches neben technischen Informationen wie Gewebeart auch die Gewebeorientierung 31 anzeigt.

Wie in den hier dargestellten Figuren kann eine Orientierungsmarkierung 10 in Form einer Mehrzahl paralleler Linien, einer Winkelkennzeichnung und/oder anderer Formen auf der ersten Folie 12 und/oder der zweiten Folie 13 der Verarbeitungshülle 1 angeordnet sein. Die Orientierungsmarkierung 10 der Verarbeitungshülle 1 kann die gesamte erste und/oder zweite Folie 12, 13 überspannend an einer Mehrzahl von Positionen auf der Verarbeitungshülle 1 beispielsweise in Form von Linien, Kreuzen oder Koordinatenkreuzen ausgeführt sein. Beim späteren Gebrauch dient diese Orientierungsmarkierung 10 der einfachen Ausrichtung der Verarbeitungshülle 1 inklusive Fasergewebezuschnitt 3 relativ zu einer zu reparierenden Laminatstruktur.

Wenn keine Orientierungsmarkierung 10 fixert auf der Verarbeitungshülle 1 vorgesehen ist, kann eine Orientierungsmarkierung 10 beim Anzeichnen einer später beschriebenen Zuschnittkontur 30 von Hand auf der Verarbeitungshülle 1 angebracht werden.

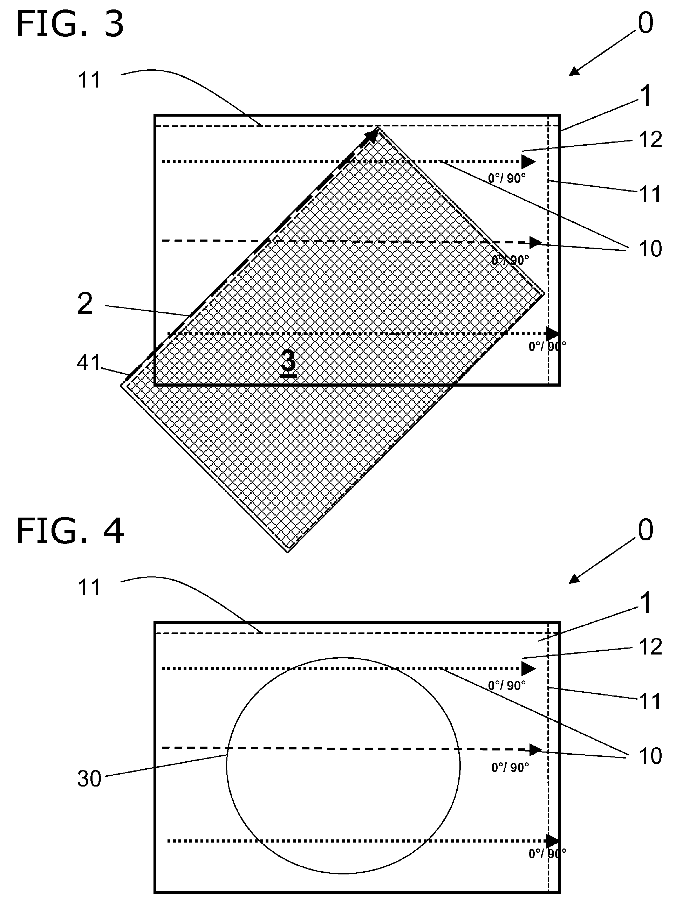

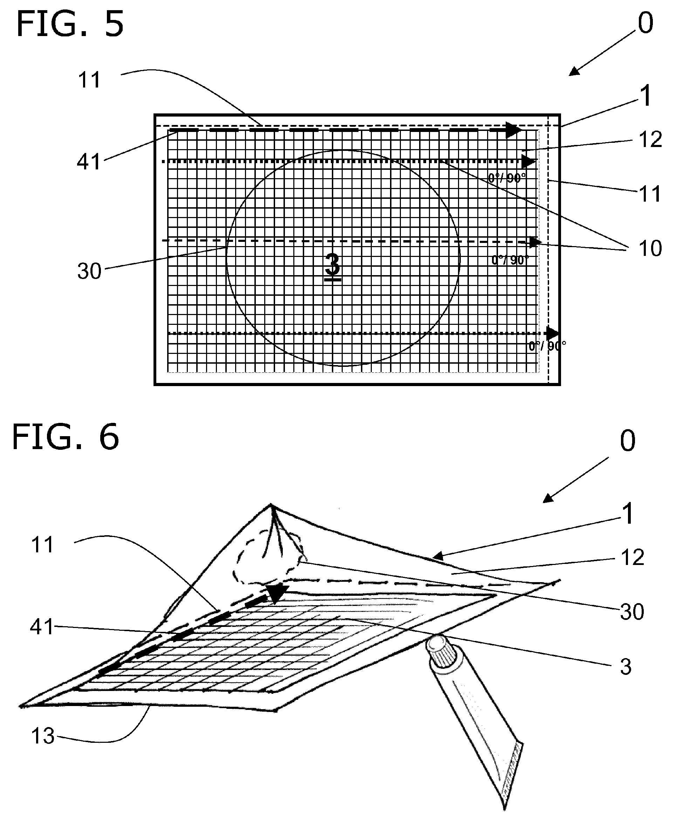

Am Beispiel der Reparatur einer Oberfläche einer Laminatstruktur wird die Verwendung des Systems 0 im Folgenden anhand der Figuren 3 bis 6 beschrieben. Eine Schadstelle in einer Oberfläche muss dazu mittels Schleifvorrichtung vorbehandelt worden sein, wobei unterschiedliche Schleifflächen unterschiedlicher abgestufter Grössen präpariert worden sind.

In einem ersten Schritt wird die Verarbeitungshülle 1 an mindestens zwei Seitenkanten aufgeschnitten und die Sicherheitshülle 2 aus der Verarbeitungshülle 1 entfernt. Die nun leere Verarbeitungshülle 1 wird auf eine präparierte zu reparierende Oberfläche mit mindestens einer Schleiffläche gelegt und eine spätere Zuschnittkontur 30, welche die Form des in die Oberfläche einzubringenden Fasergewebezuschnitt 3 definiert, auf der ersten Folie 12 angezeichnet. Falls keine feste Orientierungsmarkierung 10 auf der Verarbeitungshülle 1 angebracht ist, kann eine solche von Hand vorgenommen werden, welche kennzeichnet in welcher Orientierung der Fasergewebezuschnitt 3 in die präparierte Oberfläche eingebracht werden muss.

In einem nächsten Schritt wird die Sicherheitshülle 2 an mindestens einer Seitenkante aufgeschnitten und der Fasergewebezuschnitt 3 von der Sicherheitshülle 2 in die Verarbeitungshülle 1 transportiert. Dies muss manuell bevorzugt mit Handschuhen erfolgen, damit auch hier kein Schmutz auf den Fasergewebezuschnitt 3 gelangt. Dabei ist darauf zu achten, dass die Gewebeorientierung des Fasergewebezuschnittes 3 anhand der optisch erkennbaren Orientierungshilfe ausgerichtet ist. Wird wie hier beispielhaft gezeigt ein rechteckiger Fasergewebezuschnitt 3 und eine jeweils rechteckige Verarbeitungshülle 1 und Sicherheitshülle 2 verwendet, ergibt sich die Orientierung des Fasergewebezuschnittes 3 in der Verarbeitungshülle 1 von selbst anhand der äusseren Form des Fasergewebezuschnittes 3 bzw. anhand der Form 42 der Sicherheitshülle 2.

Nach der Positionierung des Fasergewebezuschnittes 3 wird die Verabreitungshülle 1 teilweise aufgeklappt, ein Klebstoff eingebracht und die Verarbeitungshülle 1 wieder geschlossen. Mit einem flachen Gegenstand wird anschliessend der Klebstoff in der Verarbeitungshülle 1 den Fasergewebezuschnitt vollständig benetzend gleichmässig von ausserhalb der Verarbeitungshülle 1 verstrichen.

Nun kann die Verarbeitungshülle 1 inklusive Fasergewebezuschnitt 3 entlang der Zuschnittkontur 30 ausgeschnitten werden. Da der Fasergewebezuschnitt 3 zwischen der ersten und zweiten Folie 12, 13 durch die Adhäsionskraft zwischen den Folien 12, 13 haftet, kann der Zuschnitt mit den Fingern bewegt werden. Aufgrund des Zuschnittes im imprägnierten Zustand wird ein Ausfransen des Fasergewebezuschnittes 3 verhindert.

Vor dem Auflegen auf die zu reparierende Oberfläche wird die zweite Folie 13 der Verarbeitungshülle 1 von dem Fasergewebezuschnitt 3 bzw. der ersten Folie 12 gelöst. Damit die mit Klebstoff benetzte zweite Folie 13 nicht stört, kann diese komplett entfernt werden. Der an der ersten Folie 12 aufgrund des Klebstoffes haftende Fasergewebezuschnitt 3 wird anschliessend in der erforderlichen Faserausrichtung auf die präparierte Oberfläche der Schleiffläche gelegt.

Nun erfolgen kleine Korrekturen bzgl. Einpassung und Ausrichtung. Dies erfolgt durch Ausrichtung der mindestens einen Orientierungsmarkierung 10 relativ zu den angebrachten Markierungen der zu ersetzenden Laminatlage.

Der Reparateur kann dazu die erste Folie 12 einfach um eine Achse senkrecht zur Laminatstruktur rotieren, wobei sich der Fasergewebezuschnitt 3 aufgrund der Adhäsion korrespondierend zur ersten Folie 12 mitbewegt. Sobald die gewünschte Faserorientierung des Fasergewebezuschnittes 3 erreicht ist. können entstandene Lufteinschlüsse vorsichtig und mit geeignetem Werkzeug entlüftet werden, bevor die verbliebene erste Folie 12 vorsichtig entfernt wird und die nächstfolgende Gewebelage aufgelegt wird. Entsprechend wird für die Aufbringung weiterer Fasergewebezuschnitte 3 in weitere Schleifflächen 31 verfahren.

Durch Benutzung der Verarbeitungshülle 1, wobei die Imprägnierung im Innenraum 14 stattfindet, ist eine gleichmässige Benetzung des Fasergewebezuschnittes 3 mit Klebstoff mit ausreichender Sättigung und Vermeidung trockener Stellen und die Vermeidung von Lufteinschlüssen gewährleistet. Durch die Adhäsion des Fasergewebezuschnittes 3 an der ersten Folie 12 kann die Positionierung und Ausrichtung des Fasergewebezuschnittes 3 ohne Beschmutzung der Hände und ohne Verschmutzung der Klebeflächen des Fasergewebezuschnittes 3 stattfinden. Damit ist das Aufbringen des Fasergewebezuschnittes 3 auf die Schleiffläche 31 vereinfacht worden.

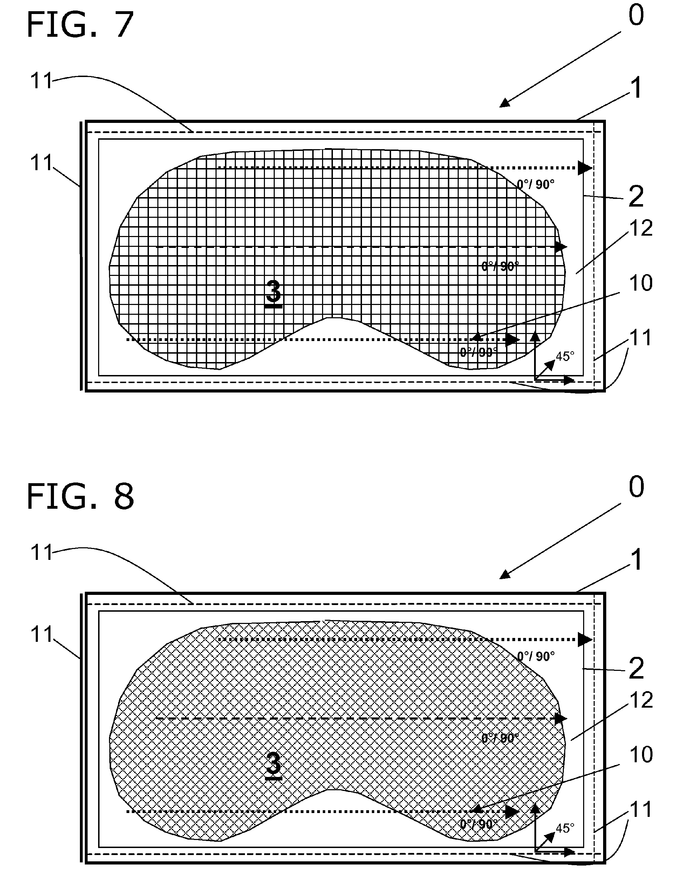

Soll eine Laminatstruktur aus einer Mehrzahl von Fasergewebezuschnitten 3 mit identisch geformten Zuschnittkonturen 30 und damit mit Fertigmass-Zuschnitten hergestellt werden, dann hat der Benutzer die Möglichkeit bereits auf seine Bedürfnisse angepasste fertige System mit entsprechend vorkonfektionierten Fasergeweben zu beziehen. Daraus herstellbar sind beispielsweise Brillenrahmen, Modellflugzeug-Bausätze oder Halbschalenbauteile. Die Fasergewebezuschnitte 3 können dann gemäss Material, Webart und auch Gewebeorientierung 31 bereits so hergestellt werden, dass auch die notwendigen verschiedenen Orientierungen unterschiedlicher aufeinander zu klebende Fasergewebezuschnitte 3 bereits angepasst sind. Dies ist am Beispiel einer komplexeren Form entsprechend der Figuren 7 und 8 dargestellt. Gemäss obiger Erläuterung können die verschiedenen Fasergewebezuschnitte 3 einfach sukzessive übereinander gestapelt fixiert werden.

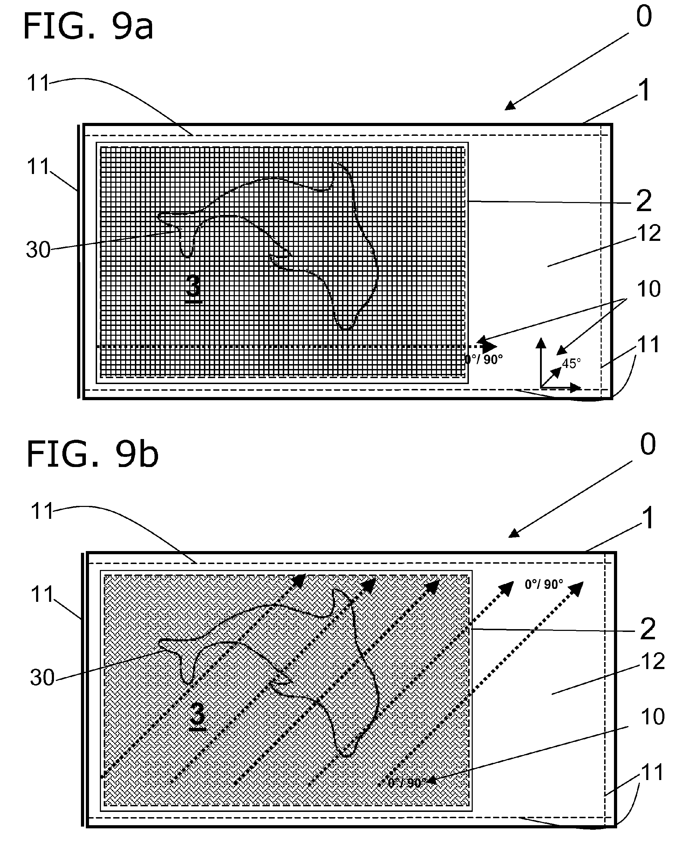

Figur 9a zeigt einen Fasergewebezuschnitt 3 in einer geschlossenen Sicherheitshülle 2, welche in einer Verarbeitungshülle 1 gelagert ist. Eine vorgefertigte Zuschnittkontur 30 ist auf der Verarbeitungshülle 1 angeordnet. In Figur 9b ist ein entsprechendes System 0 dargestellt, wobei sich lediglich die Gewebeorientierung 31 der beiden Fasergewebezuschnitte 3 unterscheidet. Bei der Verwendung des Systems 0 als Halbzeug zur Herstellung von mehrlagigen Gelegen oder Laminatstrukturen aus einer Mehrzahl von identisch geformten Fasergewebezuschnitten 3 braucht der Anwender nach dem Imprägnieren die Verarbeitungshüllen 1 nur entlang der Zuschnittkonturen 30 beschneiden und kann die Fasergewebezuschnitte 3 sukzessive aufbringen.

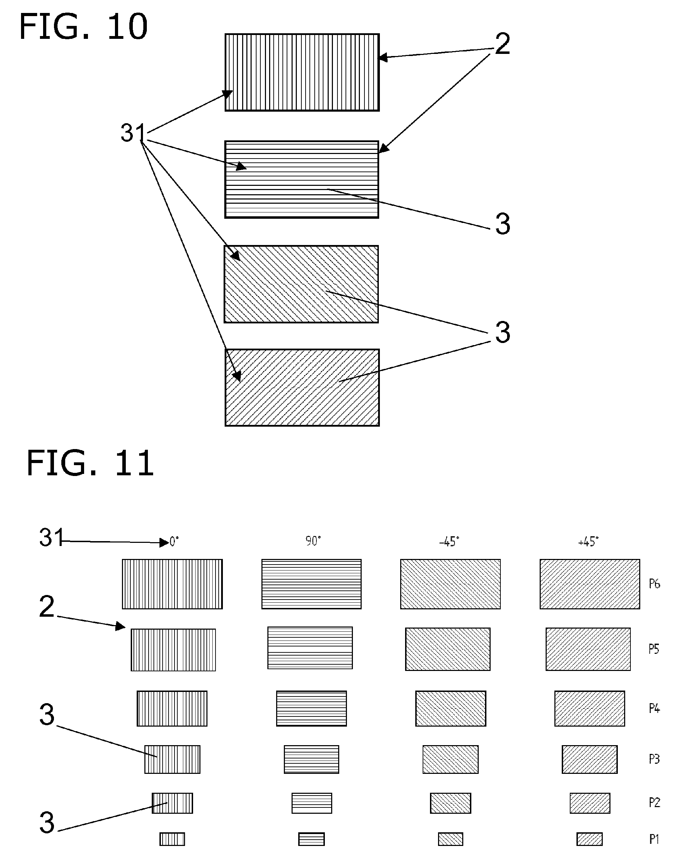

Wie in Figur 10 erkennbar kommen Fasergewebezuschnitte 3 in sogenannter "same sitze" Anordnung, übereinandergestapelt als Fertigmass-Zuschnitt mit variierender Gewebeorientierung 31 bei der Herstellung von mehrlagigen Lagenstrukturen zur Anwendung. Jedes der dargestellten Beispiele weist Fasergewebezuschnitte 3 in Grösse und Form bedarfsgerecht produziert auf. Jeweils ein Fasergewebezuschnitt 3 ist in einer Sicherheitshülle 2 gelagert.

Werden wie in Figur 11 gezeigt eine Vielzahl von Übermass-Zuschnitten gestapelt, dann wird dies mit jeweils unterschiedlicher Gewebeorientierung 31 mit aufsteigender Grösse vorgenommen, wobei die Fasergewebezuschnitte 3 in eine präparierten Schadstelle sukzessive eingefügt werden. Die verschieden grossen Fasergewebezuschnitte 3 sind hier in jeweils für jede Grösse des Fasergewebezuschnittes 3 identisch ausgeführten Sicherheitshüllen 2 angeordnet. In den Schritten P1 bis P5 werden sukzessive grösser werdende Fasergewebezuschnitte 3 in der jeweils gewünschten Gewebeorientierung verwendet, wobei die Schraffuren die Gewebeorientierung 31 in Hauptlast-Richtung anzeigen. Zu jeder beliebigen Grösse des Fasergewebezuschnittes 3 kann jede Faserorientierung gewählt werden.

Das hier vorgestellte System 0 umfasst eine doppelt gesicherte Verpackung des Fasergewebezuschnittes 3, wobei die Verpackung teilweise, in Form der Verarbeitungshülle 1 verwendet werden kann. Es kann auf eine Berührung des Fasergewebezuschnittes 3 durch den Benutzer vor der Verwendung verzichtet werden. Geübte Benutzer sind darüber hinaus auch in der Lage den Fasergewebezuschnitt 3 auch ohne Berührung von der Sicherheitshülle 2 direkt in die Verarbeitungshülle 1 zu bewegen. Dazu wird der Fasergewebezuschnitt 3 durch verschieben der Sicherheitshülle und festhalten des Fasergewebezuschnittes 3 von aussen mittels Verarbeitungshülle 1 in einer Ebene bewegt.

### Bezugszeichenliste

- 0: System
- 1: Verarbeitungshülle
10 Orientierungsmarkierung (optional)
11 Verbindungsfalz/Schweissnaht/Klebenaht
12 erste Folie
13 zweite Folie
14 Innenraum
- 2: Sicherheitshülle _{(abgeschlossen)}
- 3: Fasergewebezuschnitt
30 Zuschnittkontur
31 Gewebeorientierung _{(optisch erkennbar, Linienaufdruck, Saumfransen)}
40 Saumfransen
41 Liniendruck
42 Form der Sicherheitshülle oder des Fasergewebezuschnittes
43 Etikett auf Sicherheitshülle

## Patentansprüche

1. System (0) zur Herstellung und Reparatur von Kunststoff-Composite-Bauteilen mit Laminatstruktur, umfassend einen Fasergewebezuschnitt (3) mit einer definierten Gewebeorientierung (31), welcher in einer transluzent oder transparent ausgeführten Verarbeitungshülle (1) gelagert ist,
**dadurch gekennzeichnet, dass**
der Fasergewebezuschnitt (3) vorkonfektioniert von einer Sicherheitshülle (2) vollständig umgeben von Umwelteinflüssen geschützt geglättet und verdrehgesichert
indirekt in der Verarbeitungshülle (1) gelagert ist, wobei die Sicherheitshülle (2) vollständig von der Verarbeitungshülle (1) umgeben ist.

2. System (0) nach Anspruch 1, wobei der Fasergewebezuschnitt (3) unter einem Druck der geringer als der atmosphärische Druck ist in der geschlossenen Sicherheitshülle (2) gelagert ist.

3. System (0) nach Anspruch 1, wobei die Sicherheitshülle (2) und/oder der Fasergewebezuschnitt (3) eine optisch erkennbare Orientierungshilfe umfasst, welche die relative Ausrichtung der Sicherheitshülle (2) und/oder des Fasergewebezuschnittes (3) in der aufgeschnittenen Verarbeitungshülle (1) unterstützt.

4. System (0) nach Anspruch 3, wobei die optisch erkennbare Orientierungshilfe durch die Saumfransen des Fasergewebezuschnittes (3) oder einen Linienaufdruck auf dem Fasergewebezuschnitt (3) gebildet ist.

5. System (0) nach Anspruch 3, wobei die optisch erkennbare Orientierungshilfe durch einen Linienaufdruck und/oder durch ein Etikett (43) auf der Sicherheitshülle (2) gebildet ist.

6. System (0) nach Anspruch 3, wobei die optisch erkennbare Orientierungshilfe durch einen rechteckigen nicht-quadratischen Zuschnitt der Sicherheitshülle (2) definiert wird.

7. System (0) nach Anspruch 1, wobei mindestens eine Orientierungsmarkierung (10) auf einer ersten Folie (12) und/oder einer zweiten Folie (13) der Verarbeitungshülle (1) angeordnet ist.

8. System (0) nach Anspruch 1, wobei die Sicherheitshülle (2) transluzent oder transparent ausgeführt ist.

9. Verfahren zur Herstellung eines System (0) gemäss einem der vorhergehenden Ansprüche, **dadurch gekennzeichnet, dass** ein Fasergewebezuschnitt (3) von einer Gewebematerialrolle konfektioniert wird,
der Fasergewebezuschnitt (3) in einer Sicherheitshülle (2) positioniert wird, bevor
die Sicherheitshülle (2) verschlossen wird und
die Sicherheitshülle (2) samt Fasergewebezuschnitt (3) von einer Verarbeitungshülle (1) vollständig umschlossen wird, wobei die Verarbeitungshülle (1) fest verschlossen wird.

10. Verfahren nach Anspruch 9, wobei
der Fasergewebezuschnitt (3) vor dem Einschub in die Sicherheitshülle (2) mit einer optisch erkennbaren Orientierungshilfe versehen ist.

11. Verfahren nach Anspruch 10, wobei
die optische Orientierungshilfe in Form von Saumfransen (40) gebildet ist.

12. Verfahren nach Anspruch 10, wobei
die optische Orientierungshilfe durch den Aufdruck eines Linienaufdruckes (41) erzeugt wird.

13. Verfahren nach Anspruch 9, wobei
die Luft aus der Sicherheitshülle (2) nach Einschub des Fasergewebezuschnittes (3) manuell durch überstreichen der Folienlagen der Sicherheitshülle (2) ausgestrichen wird.

14. Verfahren nach Anspruch 9, wobei die Sicherheitshülle (2) nach Positionierung des Fasergewebezuschnittes (3) unter einem Druck der geringer als der atmosphärische Druck ist, verschlossen wird.

15. Verwendung des Systems (0) gemäss eines der Ansprüche 1 bis 8 als Halbzeug zur Herstellung von mehrlagigen Gelegen oder Laminatstrukturen aus Fasergewebezuschnitten (3) oder zur Reparatur von Schadstellen in Oberflächen von mehrlagigen Gelegen oder Laminatstrukturen aus Fasergewebezuschnitten (3).

## Claims

1. System (0) for producing and repairing plastic composite components with a laminate structure comprising a fibre woven blank (3) having a defined fabric orientation (31), which is mounted in a translucent or transparent processing sleeve (1),
**characterized in that** the fibre woven blank
(3) is mounted indirectly in the processing sleeve (1), pre-fabricated, completely surrounded by a safety sleeve (2), protected from environmental influences, smoothed and secured against turning, wherein the safety sleeve (2) is completely surrounded by the processing sleeve (1).

2. The system (0) according to claim 1, wherein the fibre woven blank (3) is mounted in the closed safety sleeve (2) at a pressure which is lower than atmospheric pressure.

3. The system (0) according to claim 1, wherein the safety sleeve (2) and/or the fibre woven blank (3) comprises a visually identifiable orientation aid which assists the relative alignment of the safety sleeve (2) and/or the fibre woven blank (3) in the cut processing sleeve (1).

4. The system (0) according to claim 3, wherein the visually identifiable orientation aid is formed by hem fringing of the fibre woven blank (3) or a linear imprint on the fibre woven blank (3).

5. The system (0) according to claim 3, wherein the visually identifiable orientation aid is formed by a linear imprint and/or by a label (43) on the safety sleeve (2).

6. The system (0) according to claim 3, wherein the visually identifiable orientation aid is defined by a rectangular non-square blank of the safety sleeve (2).

7. The system (0) according to claim 1, wherein at least one orientation marking (10) is disposed on a first film (12) and/or a second film (13) of the processing sleeve (1).

8. The system (0) according to claim 1, wherein the safety sleeve (2) is translucent or transparent.

9. Method for fabricating a system (0) according to any one of the preceding claims, **characterized in that** a fibre woven blank (3) is fabricated from a fabric material roll, the fibre woven blank (3) is positioned in a safety sleeve (2) before the safety sleeve (2) is closed and the safety sleeve (2) together with fibre woven blank (3) is completely enclosed by a processing sleeve (1), wherein the processing sleeve (1) is firmly closed.

10. The method according to claim 9, wherein
the fibre woven blank (3) is provided with a visually identifiable orientation aid before insertion into the safety sleeve (2).

11. The method according to claim 10, wherein
the visual orientation aid is formed in the form of hem fringing (40).

12. The method according to claim 10, wherein
the visual orientation aid is produced by the imprint of a linear imprint (41).

13. The method according to claim 9, wherein
the air is smoothed out from the safety sleeve (2) after insertion of the fibre woven blank (3) by manually sweeping over the film layers of the safety sleeve (2).

14. The method according to claim 9, wherein the safety sleeve (2) is closed after positioning the fibre woven blank (3) at a pressure which is lower than atmospheric pressure.

15. Use of the system (0) according to any one of claims 1 to 8 as a semi-finished product for producing multilayer fabrics or laminate structures from fibre woven blanks (3) or for repairing damaged places in surfaces of multilayer fabrics or laminate structures of fibre woven blanks (3).

## Revendications

1. Système (0) destiné à fabriquer et à réparer des éléments constitutifs en matière plastique composite avec une structure en laminé, comprenant une pièce découpée de tissu fibreux (3) avec une orientation de tissu (31) définie, laquelle est logée dans une enveloppe (1) de traitement conçue en étant translucide ou transparente,
**caractérisé en ce que**
la pièce découpée de tissu fibreux (3) totalement enveloppée en préfabrication par une enveloppe de protection (2), protégée des influences environnantes, lissée, et protégée contre la torsion est logée indirectement dans l'enveloppe de traitement (1), l'enveloppe de protection (2) étant totalement entourée par l'enveloppe de traitement (1).

2. Système (0) selon la revendication 1, la pièce découpée de tissu fibreux (3) étant logée dans l'enveloppe de protection (2) fermée sous une pression qui est inférieure à la pression atmosphérique.

3. Système (0) selon la revendication 1, l'enveloppe de protection (2) et/ou la pièce découpée de tissu fibreux (3) comprenant un auxiliaire d'orientation visuellement identifiable, lequel assiste l'orientation relative de l'enveloppe de protection (2) et/ou de la pièce découpée de tissu fibreux (3) dans l'enveloppe de traitement (1) découpée.

4. Système (0) selon la revendication 3, l'auxiliaire d'orientation visuellement identifiable étant formé par les franges d'ourlet de la pièce découpée de tissu fibreux (3) ou par une impression linéaire sur la pièce découpée de tissu fibreux (3).

5. Système (0) selon la revendication 3, l'auxiliaire d'orientation visuellement identifiable étant formé par une impression linéaire et/ou par une étiquette (43) sur l'enveloppe de protection (2).

6. Système (0) selon la revendication 3, l'auxiliaire d'orientation visuellement identifiable étant formé par une pièce découpée rectangulaire non carrée de l'enveloppe de protection (2).

7. Système (0) selon la revendication 1, au moins un marquage d'orientation (10) étant placé sur un premier film (12) et/ou un deuxième film (13) de l'enveloppe de traitement (1).

8. Système (0) selon la revendication 1, l'enveloppe de protection (2) étant réalisée en étant translucide ou transparente.

9. Procédé destiné à la fabrication d'un système (0) selon l'une quelconque des revendications précédentes, **caractérisé en ce qu'**on confectionne une pièce découpée de tissu fibreux (3) à partir d'un rouleau de tissu,
on positionne la pièce découpée de tissu fibreux (3) dans une enveloppe de protection (2) avant
de fermer l'enveloppe de protection (2) et
d'entourer totalement l'enveloppe de protection (2) avec la pièce découpée de tissu fibreux (3) d'une enveloppe de traitement (1),
lors duquel on ferme solidement l'enveloppe de traitement (1).

10. Procédé selon la revendication 9,
avant de l'insérer dans l'enveloppe de protection (2), la pièce découpée de tissu fibreux (3) étant munie d'un auxiliaire d'orientation visuellement identifiable.

11. Procédé selon la revendication 10,
l'auxiliaire d'orientation visuel étant créé sous la forme de franges d'ourlet (40).

12. Procédé selon la revendication 10, l'auxiliaire d'orientation visuel étant créé par l'impression d'une impression linéaire (41).

13. Procédé selon la revendication 9,
l'air étant extrait manuellement de l'enveloppe de protection (2) après insertion de la pièce découpée de tissu fibreux (3) par effleurement de la couche de film de l'enveloppe de protection (2).

14. Procédé selon la revendication 9, lors duquel, après le positionnement de la pièce découpée de tissu fibreux (3), on ferme l'enveloppe de protection (2) sous une pression qui est inférieure à la pression atmosphérique.

15. Utilisation du système (0) selon l'une quelconque des revendications 1 à 8 en tant que produit semi-fini pour la fabrication de nattes multicouches ou de structures laminées en pièces découpées de tissu fibreux (3) ou pour la réparation d'endroits endommagés dans des surfaces de nappes multicouches ou de structures laminées en découpes de tissu fibreux (3).
